# EUROPEAN PATENT SPECIFICATION

(11) **EP 2 726 914 B1**
(45) Date of publication and mention of the grant of the patent: **16.12.2015**
(21) Application number: 11745595.6
(22) Date of filing: 01.07.2011
(51) Int. Cl.: G02B 1/04, G02B 5/23

(54) **TEMPORARY PHOTOCHROMIC PATCH FOR AN OPHTHALMIC LENS**
TEMPORÄRES PHOTOCHROMES PFLASTER FÜR EIN BRILLENGLAS
PIÈCE PHOTOCHROMIQUE TEMPORAIRE POUR UNE LENTILLE OPHTALMOLOGIQUE

(43) Date of publication of application: 07.05.2014
(73) Proprietor: Essilor International (Compagnie Générale d'Optique), 94220 Charenton-le-Pont (FR)
(72) Inventor: CHIU, Hao-Wen, Palm Harbor, FL 34685 (US); LOCKWOOD, Matthew, James, Bradenton, FL 34208 (US)
(74) Representative: Peguet, Wilfried
(86) International application number: PCT/US2011/042741
(87) International publication number: WO 2013/006153

(56) References cited:
- WO-A1-2005/019281
- WO-A2-2009/089137
- JP-A- 1 011 185
- US-A- 4 261 656
- US-A1- 2004 096 666

## Description

### BACKGROUND OF THE INVENTION

### 1. Field of the Invention

The invention relates to an optical quality patch that can temporarily impart photochromic properties to an ophthalmic lens.

### 2. The Prior Art

Photochromic materials are capable of switching between a state where they are relatively colorless to a state where they are colored. The materials change states based on the amount and wavelength of radiation they encounter. Certain photochromic dyes are used in the ophthalmic industry to provide clear lenses indoors, where the lenses can undergo varying degrees of tinting upon exposure to sunlight. When the sunlight exposure is removed, the lenses return to their clear state.

Typically, ophthalmic lenses are clear, tinted or photochromic. To manufacture photochromic lenses, the photochromic dyes are incorporated into the lens material, into an overmold layer, into a laminated layer or into the lens coating. These various incorporation methods are complex and expensive.

The materials used to make lenses and coatings are selected for strength and scratch resistance. These characteristics are generally hostile to photochromic dyes, which require less rigid matrices in order to switch or rotate between states. In U.S. Published Application 2007-0112103, a photochromic compound is incorporated in a polymer matrix selected from the group consisting of polydimethylsiloxane, poly(hexyl acrylate), poly(butyl methacrylate), poly(ethylhexyl methacrylate), poly(benzyl methacrylate), poly(styrene-co-hexyl acrylate), poly(benzyl methacrylate-co-hexyl methacrylate), poly(methyl methacrylate-co-hexyl acrylate), condensation polymers, addition polymers, and mixtures thereof. The condensation and addition polymers may be aliphatic, aromatic, or a mixture of aliphatic and aromatic. Condensation polymers include polyamides, polyesters, urethanes and polycarbonates, In the patent application, the photochromic compound is disposed in the junction between two electrodes where it can switch between three or four states upon exposure to radiation, an acid or a base.

WO 2005/019281 discloses a transfer film: optically transparent back film // photochromic pressure sensitive adhesive (PSA) // release liner for e.g. goggles and glasses.

### SUMMARY OF THE INVENTION

Therefore, it is an object of the invention to provide a temporary photochromic film (or patch) that could be easily applied to a pair of eyeglasses.

It is a further object to provide a temporary patch that can be used to demonstrate the benefit of photochromic function to a spectacle wearer.

It is yet another object to provide such a patch that is flexible and can easily conform to the various shapes and curvatures of lenses.

It is a further object to provide a matrix having a low molecular weight to facilitate the incorporation of such dye and allow for its mobility.

It is another object to provide a photochromic patch that can be applied to the lens without adhesive.

These and other related objects are achieved by the photochromic patch according to the invention and the related process for making a photochromic patch. The process includes a first step of providing a siloxane base as a first reactant and a siloxane curing agent as a second reactant. A photochromic dye is dissolved into one of the reactants to form a first dye mixture. The first dye mixture is combined with the other reactant to initiate a polymerization reaction that will result in a polydimethylsiloxane (PDMS) polymer matrix. The polymerization reaction is completed within a form to create a viscoelastic patch. The patch is configured to a lens shape and temporarily applying the configured patch to an ophthalmic lens to impart photochromic properties.

Additional quantities of a photochromic dye are dissolved into additional quantities of polydimethylsiloxane (PDMS) to form a second dye mixture. The combining step includes combining the first dye mixture, the other reactant and the second dye mixture. The completing step includes degassing the combined base and curing agent to create a viscoelastic patch with reduced air bubbles which comprises a functional film of optical quality. The combined base and curing agent are degassed under a vacuum in the range of 20 to 40 in-Hg for at least 30 minutes. The combined base and curing agent are cured at a temperature between about 65 to 85 degrees Celsius for about 1 to 1.5 hours.

The configuring step includes trimming the patch to match the lens perimeter shape and applying the patch to the ophthalmic lens in the absence of an adhesive and at room temperature where the viscoelastic patch is tacky. The configuring step further includes placing the patch on a curved surface during one of a high temperature condition or a long flow time, so that the patch flows to conform to the shape of the curved surface. The configuring step also includes applying a lubricant to the lens prior to applying the patch to the lens, wherein the lubricant allows the patch to slide on the lens for easy alignment and where the lubricant displaces air bubbles.

The siloxane base comprises dimethylsiloxane and the curing agent comprises dimethyl methylhydrogen siloxane, and wherein the first dissolving step includes heating the one reactant to facilitate dissolving the photochromic dye. A further embodiment of the invention relates to a temporary photochromic patch for an ophthalmic lens made according to the process described above.

Another embodiment of the invention relates to a temporary photochromic patch for an ophthalmic lens. The lens includes a silicone elastomer patch made from a siloxane base and a curing agent with photochromic dye present in an amount of about 0.5 to 1.0 part per hundred base. The silicone elastomer patch is made from a polydimethylsiloxane (PDMS) polymer matrix. The silicone elastomer patch is a degassed patch having reduced entrapped air bubbles and comprising a functional film of optical quality.

The patch is trimmable to the peripheral size of an ophthalmic lens and possesses a tacky surface that can attach to an ophthalmic lens in the absence of adhesive. The patch can conform to the curved surface of the ophthalmic lens under a high temperature condition or a long flow time. In combination with the patch, a lubricant applied to the patch to facilitate alignment on the ophthalmic lens surface. The combination further includes an ophthalmic lens having a surface, wherein the patch is applied to the surface with a lubricant sandwiched therebetween. The siloxane base comprises dimethylsiloxane and the curing agent comprises dimethyl methylhydrogen siloxane.

### BRIEF DESCRIPTION OF THE DRAWINGS

The advantages, nature, and various additional features of the invention will appear more fully upon consideration of the illustrative embodiments now to be described in detail in connection with accompanying drawings. In the drawings wherein like reference numerals denote similar components throughout the views:
FIG. 1 is a flowchart showing various steps for making the photochromic patch according to the invention.
FIG. 2 is a graph showing photochromic responses of patches made according to the invention.

### DETAILED DESCRIPTION OF THE PREFERRED EMBODIMENTS

There has been a long-standing need to be able to demonstrate photochromic function to wearers of clear prescription eyeglasses. That is to show them how a photochromic lens would appear with their exact frame and lens prescription (Rx). A related need is the ability to give 2nd life to old eyeglasses through the incorporation of a photochromic film. Furthermore, it would be desirable to be able to transform a pair of existing clear eyeglasses into photochromic lens within a few minutes at the offices of an eye care professional (ECP). Such a photochromic patch would need to be easily applied onto an existing lens without the need of special equipment or materials. Basic requirements of such patches include acceptable photochromic performance and flexibility to conform to different lens shapes or curves. It is also preferred if the patches can adhere to the lenses of existing eyeglasses without using adhesive.

To address these needs, the present invention provides a temporary photochromic patch and method of making same for applying to a lens to obtain a photochromic function. More specifically, polydimethylsiloxane (PDMS) photochromic patches were created by first mixing photochromic dyes into the reactants then initiating the curing reaction to form thin silicone patches that turn dark when expose to sunlight.

The proposed solution is to make photochromic patches using polydimethylsiloxane (PDMS). PDMS is an optically clear silicone elastomer. It is viscoelastic, which means it behaves like an elastic solid (similar to rubber) at low temperature or short flow time but acts like a viscous liquid (similar to honey) at high temperature or long flow time. Therefore, if some PDMS is left on a surface at room temperature for a long period of time, it will flow to conform to the shape of the surface and replicate any surface textures. This makes is possible for a flat piece of PDMS patch to take the shape of a curved lens surface. The same PDMS is rubbery and slightly tacky at room temperature making it easier to handle and adhere to a surface without the use of any adhesive. All these advantageous properties of PDMS make it an ideal candidate for photochromic patches that can be easily applied onto existing eyeglasses. Furthermore, it is important to note that the matrix wherein the photochromic dyes will be incorporated, need to have a low molecular weight. Without this physical parameter, dye cannot be incorporated easily to the necessary concentration to obtain a relevant photochromic effect.

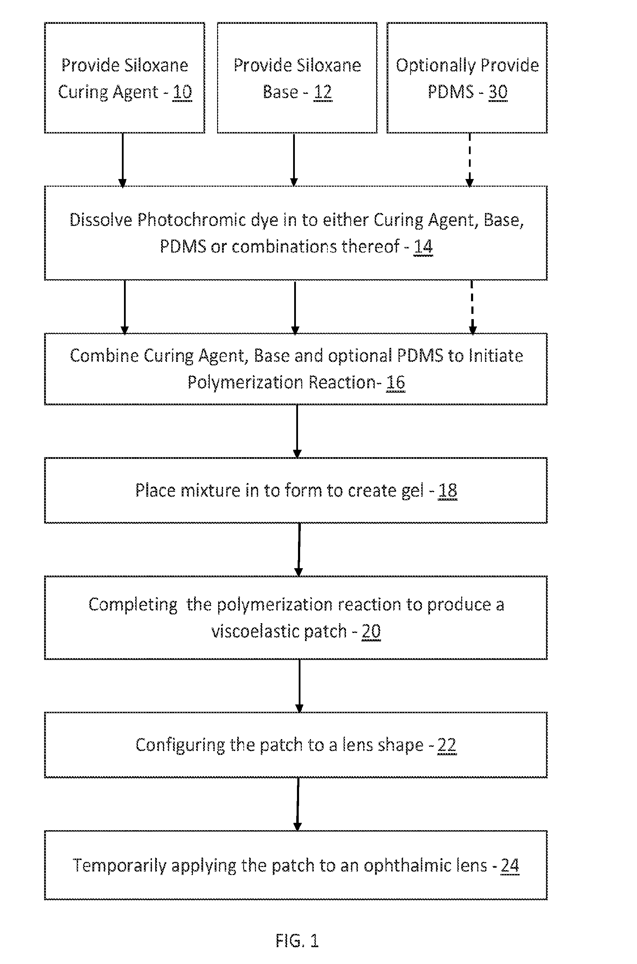

The process for making a photochromic patch according to an embodiment of the invention is illustrated in the flowchart of FIG. 1. Initially, there is provided a siloxane curing agent 10 and a siloxane base 12 which can be combined and polymerized to form an optically clear silicone elastomer. To actually produce a photochromic PDMS patch, it is necessary to introduce photochromic dyes into the polymer matrix. Typically, PDMS is formed by mixing together in certain ratio the dimethylsiloxane base and the curing agent (or crosslinker) such as dimethyl methylhydrogen siloxane that thermally initiates the polymerization reaction. Therefore, the most easiest and effective way to incorporate photochromic dyes into the system is to dissolve the dyes into individual reactants (either the base or the curing agent or both) of the reaction mixture before raising the temperature to start polymerization, per step 14. Optionally, for improving the darkening performance, additional photochromic dyes can be dissolved into low molecular weight PDMS silicone oil per step 30, which is then added to the reaction mixture in combining step 16 before polymerization.

In the examples, the added dye and curing agent are measured in "parts per hundred base" (phb). The base is shown in step 12. The curing agent of step 10 is typically added in an amount of between 5-10 phb. If the dye of step 14 is added to the curing agent, it would be added in an amount between 0.1 and 1.0 phb, preferably about 0.5 phb. If the dye of step 14 is added to the base, it would be added in an amount between 0.1 and 1.0 phb, preferably about 0.5 phb. The PDMS of step 30 could be added in an amount up to 20 phb, or in an amount between 10 and 20 phb. If the dye of step 14 is added to the PDMS, it would be added in an amount between 0.1 and 1.0 phb, preferably about 0.5 phb.

According to the invention, any known optical photochromic dye can be used. For example, naphthopyrans, fulgides, benzopyrans, fulgimides,spironaphthopyrans, spirobenzoxazines, spironaphthoxazines, spirobenzopyrans, and combinations. The dyes can be blended to achieve different performance or cosmetic characteristics.

If the dye is added to the curing agent, the mixture may be heated and mixed to assist in dissolving the dye in to the solution. The mixture may be heated to a temperature in the range of 110 to 195 degrees Celsius, preferably in the range of about 130 to 175 degrees Celsius. If the dye is added to the PDMS, the mixture may be heated and mixed to assist in dissolving the dye in to the solution. The mixture may be heated to a temperature in the range of 110 to 150 degrees Celsius, preferably about 130 degrees Celsius. The dye dissolved in solution is then cooled to room temperature before combining it with the base.

During the polymerization step 20, the form may be placed in a vacuum oven for heating and degassing. In the following examples, polymerization comprises thermal initiation. In other chemical systems that provide the same functionality and mechanical properties, polymerization may consist of UV cure. The vacuum is in the range of 20 to 40 in-Hg, preferably about 30 in-Hg. The temperature is in the range of 65 to 85 degrees Celsius, preferably about 75 degrees Celsius. The mixture is heated under vacuum for 40 to 80 minutes, preferably about 60 minutes. It will be understood by those skilled in the art, that a lower vacuum may adequately degass under warmer or longer processing conditions.

After obtaining the photochromic dye containing reaction mixture, it is then casted into a form per step 18, or glass dish (or other flat surfaces) or poured into a cavity formed by two opposite-faced optical molds separated by a spacer of desired thickness. The whole assembly is then placed into an oven, preferably a vacuum oven for easy removal of air bubbles from mixing, and the temperature is raised to about 75°C and held for at least 1 hour to complete the curing reaction per step 20 forming the PDMS patch.

To apply a photochromic patch onto a lens of existing eyeglasses, the patch is first cut into the shape of the lens by ECP with a pair of scissors or a die-cutter, per step 22. Subsequently, the ECP applies some soapy water on the front surface of the target lens then patch is applied onto the lens, per step 24. The soapy water acts as a lubricant that allows the patch to slide on the surface of the lens for easy alignment of the two and also for preventing the trapping of air bubbles. The newly formed photochromic eyeglasses are ready to be wear after the water is dried (in about 10-15 minutes at room temperature). The photochromic patches can also be removed easily to revert back to the original eyeglasses as there is no permanent bonding between the patches and the lenses.

The requirements can be achieved by providing a base and a curing agent, where a photochromic dye is dissolved into either the base, the curing agent or both. The dissolved dye, base and curing agent are combined to initiate polymerization. A further polymer containing additional quantities of photochromic dye may optionally be added to the dye, base and curing agent mixture. The mixture is introduced in to a form where the polymerization reaction is completed to create a viscoelastic patch. The further polymer and the resulting polymer matrix may be the same or different materials, although in a preferred embodiment, they comprise the same material or chemically-related materials. The molecular weight is one way to express the polymer's size, i.e. the length of the chain, or degree of polymerization. In general, tensile strength increases with polymer chain length. Internally, a higher tensile strength means less local flexibility for photochromic dye mobility or switching action. That is, the dye's rotating between the flat colorless state, and the perpendicular colored state.

The viscoelastic patch comprises a functional film of optical quality. The viscoelastic patch is readily trimmed to match the peripheral shape of the host lens. The patch can conform to the curvature and shape of other lens features when heated or allowed a long flow time. The viscoelastic is tacky and will stick to most lens materials. A lubricant, adhesive or other fluid may be applied between the lens and patch to facilitate placement. The patch provides a photochromic functions that can be added to existing spectacles within a few minutes, or less than half an hour. If the patch is applied in the absence of adhesive, it can be easily removed without any damage to the spectacles.

### Example 1. Mold Max 27T Silicone Kit

Photochromic PDMS patches were prepared using Mold Max 27T silicone kit (available from Smooth-On) according to the following procedure:
1. Mold Max 27T part-A measuring at 26.3 grams was poured into a glass beaker.
2. Next, 0.0281 grams of a mixture of photochromic dye from Transitions Optical, Inc. (TOI) to provide a brown color in the activated state, was added into the beaker in step 1. The amount of the dye was about 0.1 wt% of the part-A of Mold Max 27T. The mixture was then heated on a hot plate to 175°C to help dissolving the photochromic dye.
3. The mixture in step 2 was let cooled to room temperature (about 25°C) then 0.26 grams of the part-B of Mold Max 27T were added into the beaker and mixed thoroughly.
4. The resulting mixture of step 3 was poured into a flat-bottom plastic cup. A thin patch of uncured gel-like silicone was formed.
5. The plastic cup was placed in an oven under 30 in-Hg vacuums at 75°C for about 1 hour to cure the silicone.

The resulting silicone patch turned dark when exposed to sunlight and returned to translucent clear when blocked the sunlight exposure, which demonstrated clearly the photochromic function.

### Example II. Dow Corning Sylgard® 184 Silicone Elastomer Kit

Photochromic PDMS patches were prepared using Dow Coming Sylgard® 184 silicone elastomer kit according to the following procedure:
1. First 0.3312 grams of #170-24-4 B photochromic dye from TOI were dissolved into 3.08 grams of the curing agent of the Sylgard 184 that were heated at 130°C. The resulting mixture was then filtered through a 5µm filter and let cooled to room temperature.
2. The filtered solution in step 1 was mixed into 30.1 grams of the Sylgard 184 base so that the photochromic dye was about 1 wt% of the base.
3. The resulting mixture of step 2 was poured into a flat-bottom glass dish forming a thin patch (about 1mm thick) of uncured gel-like silicone.
4. The glass dish was placed in an oven under 30 in-Hg vacuums at 75°C for about 1 hour to cure the silicone.

The resulting PDMS patch turned dark when exposed to sunlight and returned to clear when blocked the sunlight exposure, which demonstrated clearly the photochromic function.

### Example III. Dow Corning Sylgard® 184 Silicone Elastomer Kit + 200® Fluid

Photochromic PDMS patches were prepared using Dow Corning Sylgard® 184 silicone elastomer kit and Dow Corning 200® Fluid 20 CST according to the following procedure:
1. First 0.16 grams of #170-24-4 B photochromic dye from TOI were dissolved into 3.0 grams of the Dow Coming 200® Fluid 20 CST that were heated at 130°C. The resulting mixture was then filtered through a 5µm filter and let cooled to room temperature.
2. The filtered solution in step 1 was mixed into 30.0 grams of the Sylgard 184 base at room temperature.
3. Next, 0.162 grams of #170-24-4 B photochromic dye from TOI were dissolved into 1.50 grams of the curing agent of the Sylgard 184 that were heated at 130°C. The resulting mixture was then filtered through a 5µm filter and let cooled to room temperature.
4. The mixtures of step 2 and step 3 were then mixed together thoroughly at room temperature.
5. The resulting mixture of step 4 was poured into a mold that was formed by two pieces of round glasses, 80 mm in diameter and 4 mm in thickness. Sandwiched in-between the two glass pieces was a 0.75 mm thick annulus spacer having an inside diameter of 70mm that was die-cut from a polycarbonate sheet.
6. The whole assembly of step 5 was placed in an oven under 30 in-Hg vacuums at 75°C for about 1 hour to cure the silicone.

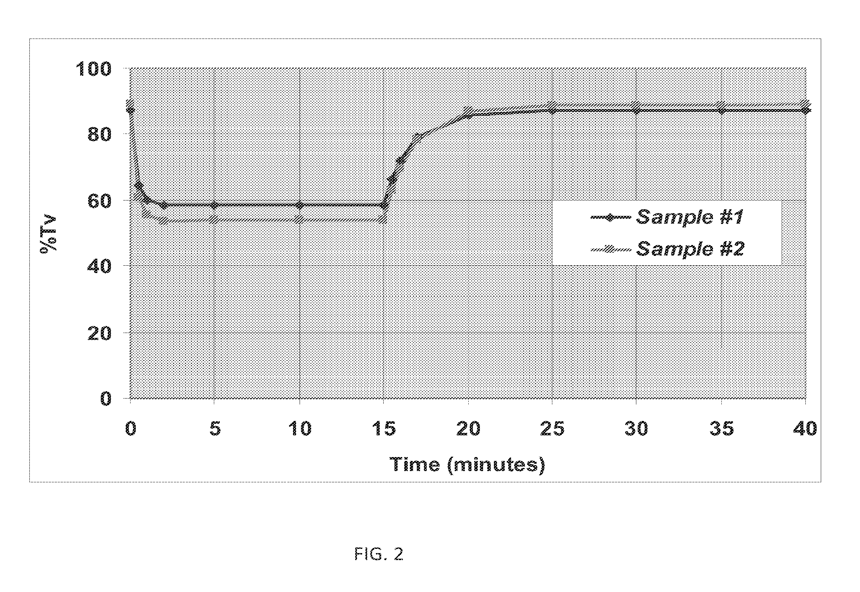

The resulting PDMS patch turned dark when exposed to sunlight and returned to clear when blocked the sunlight exposure, which demonstrated clearly the photochromic function. The photochromic performances of the patches were further characterized using an optical bench. The results are shown in FIG. 2, wherein two samples from Example III were tested. After activation (by exposing the samples to UV), the transmittance (%Tv) of sample #1 decreased rapidly from an initial clear state of 87% to a full darkening state of 59% in about 2 minutes. When deactivated (at time = 15 minutes), sample #1 changed from the darkening state back to fully clear in about 10 minutes. Similarly, %Tv of sample #2 decreased from 89% to 54% when activated and turned to fully clear in about 10 minutes when deactivated.

The invention provides a photochromic patch and process for making same. The photochromic patches can be easily trimmed and then flowed to conform to curves and lens feature shapes. The patch can be trimmed with scissors or die cut to the shape of the lens. The trimmed patch can be set upon the lens and heated or given time to flow. The patch can conform to the curvature of the lens and/or lens features, like ledges in bi-focal lenses. They can be applied onto existing eyeglasses to demonstrate the function of photochromism within a few minutes without damaging the eyeglasses. Currently, there is no other means to allow customers to experience photochromic functionality with their own eyeglasses. That is, where they can try photochromics on their own frame and prescription lenses right in the ECPs office.

The tackiness of the viscoelastic patch allows it to stick to most types of organic and inorganic lenses. For example, the viscoelastic patch can stick, with or without soapy water, to glass like crown glass or thermoset plastics like CR-39 and polyurethanes, or thermoplastics like polycarbonate, polyamide, polyimide, polysulfone, copolymers of polyethyleneterephthalate and polycarbonate, polyolefine, homopolymers and copolymers of diethylene glycol bis(allylcarbonate), homopolymers and copolymers of (meth)acrylic monomers, homopolymers and copolymers of thio(meth)acrylic monomers, homopolymers and copolymers of urethane, homopolymers and copolymers of thiourethane, epoxy homopolymers and copolymers, and episulfure homopolymers and copolymers. In addition, the viscoelastic patch can stick, with or without soapy water, to lens coatings, like hard coatings, scratch resistant coatings, anti-reflective coatings, smudge resistant coatings and anti-static coatings.

## Claims

1. A process for making a temporary photochromic patch for an ophthalmic lens comprising the steps of:
providing a siloxane base as a first reactant and a siloxane curing agent as a second reactant;
first dissolving a photochromic dye into one of the reactants to form a first dye mixture;
combining the first dye mixture with the other reactant to initiate a polymerization reaction that will result in a polydimethylsiloxane (PDMS) polymer matrix;
completing the polymerization reaction within a form to create a viscoelastic patch; and
configuring the patch to a lens shape and temporarily applying the configured patch to an ophthalmic lens to impart photochromic properties, wherein the configuring step includes applying a lubricant to the lens prior to applying the patch to the lens, wherein the lubricant allows the patch to slide on the lens for easy alignment and where the lubricant displaces air bubbles.

2. The process of claim 1, further comprising the step of:
second dissolving additional quantities of a photochromic dye into additional quantities of polydimethylsiloxane (PDMS) to form a second dye mixture, and wherein said combining step includes combining the first dye mixture, the other reactant and the second dye mixture.

3. The process of claim 1, wherein the completing step includes degassing the combined base and curing agent to create a viscoelastic patch with reduced air bubbles which comprises a functional film of optical quality.

4. The process of claim 3, wherein the combined base and curing agent are degassed under a vacuum in the range of 20 to 40 in-Hg for at least 30 minutes.

5. The process of claim 4, wherein the combined base and curing agent are cured at a temperature between about 65 to 85 degrees Celsius for about 1 to 1.5 hours.

6. The process of claim 3, wherein the configuring step includes trimming the patch to match the lens perimeter shape and applying the patch to the ophthalmic lens in the absence of an adhesive and at room temperature where the viscoelastic patch is tacky.

7. The process of claim 6, wherein the configuring step includes placing the patch on a curved surface during one of a high temperature condition or a long flow time, so that the patch flows to conform to the shape of the curved surface.

8. The process of claim 1, wherein the siloxane base comprises dimethylsiloxane and the curing agent comprises dimethyl methylhydrogen siloxane, and wherein the first dissolving step includes heating the one reactant to facilitate dissolving the photochromic dye.

9. A temporary photochromic patch for an ophthalmic lens made according to the process of claim 1.

10. A temporary photochromic patch for an ophthalmic lens comprising:
a silicone elastomer patch made from a siloxane base, a curing agent with photochromic dye present in an amount of about 0.5 to 1.0 part per hundred base, and a lubricant applied to the patch to facilitate alignment on the ophthalmic lens surface , wherein the silicone elastomer patch is made from a polydimethylsiloxane (PDMS) polymer matrix, wherein the silicone elastomer patch is a degassed patch having reduced entrapped air bubbles and comprising a functional film of optical quality.

11. The patch of claim 10, wherein the patch is trimmable to the peripheral size of an ophthalmic lens and possesses a tacky surface that can attach to an ophthalmic lens in the absence of adhesive.

12. The patch of claim 11, wherein the patch can conform to the curved surface of the ophthalmic lens under a high temperature condition or a long flow time.

13. The patch of claim 10, further comprising:
an ophthalmic lens having a surface, wherein the patch is applied to the surface with a lubricant sandwiched therebetween.

14. The patch of claim 10, wherein the siloxane base comprises dimethylsiloxane and the curing agent comprises dimethyl methylhydrogen siloxane.

## Patentansprüche

1. Verfahren zur Herstellung einer temporären photochromen Folie für ein Brillenglas, welches folgende Schritte aufweist:
Bereitstellen einer Siloxan-Basis als ein erster Reaktant und eines Siloxan-Härters als ein zweiter Reaktant;
als erstes, Auflösen eines photochromen Farbstoffes in einen der Reaktanten zum Bilden einer ersten Farbstoffmischung;
Kombinieren der ersten Farbstoffmischung mit dem anderen Reaktanten zum Einleiten einer Polymerisationsreaktion, die in einer Polydimethylsiloxan(PDMS)-Polymermatrix resultiert;
Abschließen der Polymerisationsreaktion innerhalb einer Form zum Erzeugen einer viskoelastischen Folie; und
Konfigurieren der Folie in eine Glasform und temporäres Aufbringen der konfigurierten Folie auf ein Brillenglas zum Vermitteln photochromer Eigenschaften, wobei der Konfigurationsschritt das Auftragen eines Gleitmittels auf das Glas vor dem Aufbringen der Folie auf das Glas aufweist, wobei das Gleitmittel gestattet, dass die Folie zur einfachen Ausrichtung auf dem Glas gleitet und wobei das Gleitmittel Luftbläschen verdrängt.

2. Verfahren nach Anspruch 1, welches ferner folgenden Schritt aufweist:
als zweites, Auflösen zusätzlicher Mengen eines photochromen Farbstoffes in zusätzlichen Mengen Polydimethylsiloxan (PDMS) zum Bilden einer zweiten Farbstoffmischung, und wobei der Kombinationsschritt das Kombinieren der ersten Farbstoffmischung, des anderen Reaktanten und der zweiten Farbstoffmischung aufweist.

3. Verfahren nach Anspruch 1, wobei der Abschlussschritt das Entgasen der Kombination aus Basis und Härter zum Erzeugen einer viskoelastischen Folie mit verringerten Luftbläschen aufweist, welche eine Funktionsschicht in optischer Qualität darstellt.

4. Verfahren nach Anspruch 3, wobei die Kombination aus Basis und Härter unter einem Vakuum im Bereich von 20 bis 40 in-Hg für mindestens 30 Minuten entgast wird.

5. Verfahren nach Anspruch 4, wobei die Kombination aus Basis und Härter bei einer Temperatur zwischen etwa 65 und 85 Grad Celsius für etwa 1 bis 1,5 Stunden gehärtet wird.

6. Verfahren nach Anspruch 3, wobei der Konfigurationsschritt das Zuschneiden der Folie zum Übereinstimmen mit der Glasumfangsform und das Aufbringen der Folie auf das Brillenglas in Abwesenheit eines Haftmittels und bei Raumtemperatur aufweist, wobei die viskoelastische Folie klebrig ist.

7. Verfahren nach Anspruch 6, wobei der Konfigurationsschritt das Platzieren der Folie auf einer gekrümmten Fläche während entweder eines Hochtemperaturzustandes oder einer langen Fließzeit aufweist, sodass die Folie fließt, um sich der Form der gekrümmten Fläche anzupassen.

8. Verfahren nach Anspruch 1, wobei die Siloxan-Basis Dimethylsiloxan umfasst und der Härter Dimethylmethylwasserstoffsiloxan umfasst, und wobei der erste Auflösungsschritt das Erhitzen des einen Reaktanten zum Vereinfachen des Auflösens des photochromen Farbstoffes aufweist.

9. Temporäre photochrome Folie für ein Brillenglas, hergestellt gemäß dem Verfahren von Anspruch 1.

10. Temporäre photochrome Folie für ein Brillenglas, welche Folgendes aufweist:
eine Silikonelastomer-Folie, hergestellt aus einer Siloxan-Basis, einem Härter mit photochromem Farbstoff, der in einer Menge von etwa 0,5 bis 1,0 Teilen pro hundert Teilen Basis vorliegt, und einem Gleitmittel, das auf die Folie aufgetragen ist, um das Ausrichten auf der Brillenglasfläche zu vereinfachen, wobei die Silikonelastomer-Folie aus einer Polydimethylsiloxan(PDMS)-Polymermatrix hergestellt ist, wobei die Silikonelastomer-Folie eine entgaste Folie mit verringerten eingeschlossenen Luftbläschen ist und eine Funktionsschicht in optischer Qualität darstellt.

11. Folie nach Anspruch 10, wobei die Folie auf die Umfangsgröße eines Brillenglases zugeschnitten werden kann und eine klebrige Fläche besitzt, die in Abwesenheit eines Haftmittels an einem Brillenglas anhaften kann.

12. Folie nach Anspruch 11, wobei sich die Folie unter einem Hochtemperaturzustand oder einer langen Fließzeit an die gekrümmte Fläche des Brillenglases anpassen kann.

13. Folie nach Anspruch 10, welche ferner Folgendes aufweist:
ein Brillenglas mit einer Fläche, wobei die Folie mit einem dazwischen eingeschlossenen Gleitmittel auf die Fläche aufgebracht ist.

14. Folie nach Anspruch 10, wobei die Siloxan-Basis Dimethylsiloxan umfasst und der Härter Dimethylmethylwasserstoffsiloxan umfasst.

## Revendications

1. Procédé de fabrication d'une pièce photochrome temporaire pour une lentille ophtalmique comprenant les étapes consistant à :
se procurer une base siloxane comme premier réactif et un durcisseur siloxane comme deuxième réactif ;
dissoudre en premier lieu un colorant photochrome dans un des réactifs pour former un premier mélange de colorant ;
combiner le premier mélange de colorant avec l'autre réactif pour initier une réaction de polymérisation qui se soldera par une matrice polymère de polydiméthylsiloxane (PDMS) ;
achever la réaction de polymérisation à l'intérieur d'une forme pour créer une pièce viscoélastique ; et
configurer la pièce une forme de lentille et appliquer temporairement la pièce configurée à une lentille ophtalmique pour conférer des propriétés photochromes, l'étape de configuration comportant l'application d'un lubrifiant à la lentille avant l'application de la pièce à la lentille, le lubrifiant permettant à la pièce de glisser sur la lentille pour un alignement facile et le lubrifiant y déplaçant les bulles d'air.

2. Procédé de la revendication 1, comprenant en outre l'étape consistant à :
dissoudre en deuxième lieu des quantités supplémentaires d'un colorant photochrome dans des quantités supplémentaires de polydiméthylsiloxane (PDMS) pour former un deuxième mélange de colorant, et dans lequel ladite étape de combinaison comporte la combinaison du premier mélange de colorant, de l'autre réactif et du deuxième mélange de colorant.

3. Procédé de la revendication 1, dans lequel l'étape d'achèvement comporte le dégazage de la base et du durcisseur combinés pour créer une pièce viscoélastique avec des bulles d'air réduites qui comprend un film fonctionnel de qualité optique.

4. Procédé de la revendication 3, dans lequel la base et le durcisseur combinés sont dégazés sous un vide dans la gamme de 20 à 40 pouces Hg pendant au moins 30 minutes.

5. Procédé de la revendication 4, dans lequel la base et le durcisseur combinés sont durcis à une température comprise entre environ 65 et 85 degrés Celsius pendant environ 1 à 1,5 heure.

6. Procédé de la revendication 3, dans lequel l'étape de configuration comporte le détourage de la pièce pour s'adapter à la forme du périmètre de la lentille et l'application de la pièce à la lentille ophtalmique en l'absence d'un adhésif et à température ambiante où la pièce viscoélastique est collante.

7. Procédé de la revendication 6, dans lequel l'étape de configuration comporte le positionnement de la pièce sur une surface incurvée pendant un état à haute température ou un long temps d'écoulement, de telle sorte que la pièce coule pour épouser la forme de la surface incurvée.

8. Procédé de la revendication 1, dans lequel la base siloxane comprend du diméthylsiloxane et le durcisseur comprend du diméthylméthylhydrogénosiloxane, et dans lequel la première étape de dissolution comporte le chauffage du premier réactif pour faciliter la dissolution du colorant photochrome.

9. Pièce photochrome temporaire pour une lentille ophtalmique fabriquée selon le procédé de la revendication 1.

10. Pièce photochrome temporaire pour une lentille ophtalmique comprenant :
une pièce d'élastomère de silicone fabriquée à partir d'une base siloxane, d'un durcisseur avec un colorant photochrome présent dans une quantité d'environ 0,5 à 1,0 partie pour 100 parties de base, et d'un lubrifiant appliqué à la pièce pour faciliter l'alignement sur la surface de la lentille ophtalmique, la pièce d'élastomère de silicone étant fabriquée à partir d'une matrice polymère de polydiméthylsiloxane (PDMS), la pièce d'élastomère de silicone étant une pièce dégazée ayant des bulles d'air piégées réduites et comprenant un film fonctionnel de qualité optique.

11. Pièce de la revendication 10, la pièce étant détourable jusqu'à la taille périphérique d'une lentille ophtalmique et possédant une surface collante qui peut se fixer à une lentille ophtalmique en l'absence d'adhésif.

12. Pièce de la revendication 11, la pièce pouvant épouser la surface incurvée de la lentille ophtalmique dans un état à haute température ou pendant un long temps d'écoulement.

13. Pièce de la revendication 10, comprenant en outre :
une lentille ophtalmique ayant une surface, la pièce étant appliquée à la surface avec un lubrifiant intercalé entre celles-ci.

14. Pièce de la revendication 10, dans laquelle la base siloxane comprend du diméthylsiloxane et le durcisseur comprend du diméthylméthylhydrogénosiloxane.
